Europäisches Patentamt

European Patent Office

Office européen des brevets

(11) Numéro de publication: **0 399 593**
**A1**

## (12) DEMANDE DE BREVET EUROPEEN

(21) Numéro de dépôt: **90201223.6**

(22) Date de dépôt: **11.05.90**

(51) Int. Cl.⁵: **C01B 35/12**

(30) Priorité: **22.05.89 FR 8906770**

(43) Date de publication de la demande:
**28.11.90 Bulletin 90/48**

(84) Etats contractants désignés:
**AT BE CH DE DK ES FR GB GR IT LI LU NL SE**

(71) Demandeur: **INTEROX (Société Anonyme)**
**Rue du Prince Albert, 33**
**B-1050 Bruxelles(BE)**

(72) Inventeur: **Hauchecorne, Koenrad**
**Pullaersteenweg 32**
**B-2658 Puurs(BE)**
Inventeur: **Joris, Serge**
**Rue E. Labarre 45**
**B-5800 Gembloux(BE)**
Inventeur: **Balthasart, Dominique**
**Avenue de la Bugrane 77/3**
**B-1020 Bruxelles(BE)**

(74) Mandataire: **Decamps, Alain René François et al**
**SOLVAY & Cie S.A. Département de la Propriété Industrielle Rue de Ransbeek, 310**
**B-1120 Bruxelles(BE)**

(54) **Procédé pour l'épuration de solutions de métaborate de métal alcalin et perborate de métal alcalin préparé à partir de ces solutions.**

(57) On épure les solutions de métaborate de métal alcalin en les clarifiant par élimination des particules en suspension qui ont un diamètre inférieur à 10 μm et supérieur à 0,2 μm.

Les particules en suspension sont éliminées par centrifugation ou par microfiltration sur membrane.

Les solutions de métaborate obtenues sont limpides et incolores et sont utilisables pour la préparation des perborates en vue de leur incorporation dans les produits lessiviels.

## Procédé pour l'épuration de solutions de métaborate de métal alcalin et perborate de métal alcalin préparé à partir de ces solutions

La présente invention concerne un procédé pour l'épuration de solutions de métaborate de métal alcalin.

Les solutions de métaborate de métal alcalin permettent, par réaction avec le peroxyde d'hydrogène, la préparation de perborates qui, pour leur teneur en oxygène actif, sont fréquemment utilisés comme agents de blanchiment dans les produits lessiviels.

Les solutions de métaborate de métal alcalin se caractérisent malheureusement souvent par une coloration jaunâtre. Avant leur transformation en perborate et leur incorporation dans les produits lessiviels, il est dès lors souhaitable d'épurer ces solutions, ce qu'une simple filtration classique ne permet pas de réaliser.

Dans le brevet britannique 1020446 (LAPORTE CHEMICALS LTD), on épure les solutions de pyrophosphate et de métaborate de métal alcalin par traitement avec des agents de séquestration afin de former des complexes insolubles qui, après une période de repos et adjonction d'agents réducteurs ($Na_2S$ et $Na_2S_2O_4$), peuvent être séparés par filtration ou par extraction au moyen d'un solvant organique.

Dans le brevet allemand 2608597 (TREIBACHER CHEM.WERKE), on produit une solution de métaborate en traitant de la colémanite ($Ca_2B_6O_{11}$) avec une solution aqueuse d'hydroxyde d'un métal alcalin entre 100 et 700° C durant 10 min. à 3 heures, en mélangeant la solution obtenue avec une solution de $Na_2CO_3$ maintenue à une température proche de 90° C puis enfin en filtrant sous vide la solution de métaborate.

Ces procédés connus exigent la mise en oeuvre de plusieurs opérations successives et comprennent généralement un traitement chimique ou thermique qui, outre le temps qu'il nécessite et le coût qu'il entraîne, peut influencer défavorablement la composition ou le comportement ultérieur de la solution.

La présente invention concerne dès lors un procédé pour l'épuration de solutions de métaborate de métal alcalin selon lequel on clarifie ces solutions par élimination des particules en suspension qui ont un diamètre inférieur ou égal à 10$\mu$m et supérieur ou égal à 0,2$\mu$m.

Par la mise en oeuvre du procédé selon l'invention, la coloration originale des solutions, qui est peut-être due à un phénomène de turbidité provoqué par les impuretés contenues dans le minerai de départ, disparaît et l'on obtient des solutions clarifiées sans devoir recourir à l'usage de réactifs ou d'un traitement en plusieurs étapes.

Par le terme "clarifier", on entend rendre limpide et incolore la solution de métaborate à traiter.

Les solutions sont le plus souvent des solutions aqueuses. L'invention s'applique particulièrement à toute solution dont la concentration pondérale est au minimum de 10 et au maximum de 350g de métaborate de métal alcalin par kg de solution. Le pH de ces solutions est le plus fréquemment compris entre 11 et 14. En général, les solutions sont obtenues par l'attaque alcaline d'un minerai borocalcique ($Ca_2B_6O_{11}$) ou borosodique ($Na_2B_4O_7$). Diverses teneurs en particules en suspension peuvent être rencontrées. En particulier, dans des solutions obtenues par attaque d'un minerai borosodique, on peut généralement trouver de 10 à 170 mg de particules solides par kg de solution.

Les solutions de métaborate de divers métaux alcalins peuvent être épurées par le procédé selon l'invention. Fréquemment, le métal alcalin est le sodium.

Diverses techniques peuvent être utilisées pour éliminer de très petites particules: parmi celles-ci la centrifugation s'avère intéressante. Une alternative particulièrement performante consiste à retenir les particules sur une membrane de microfiltration. Ces procédés permettent d'extraire un filtrat parfaitement clarifié par la seule élimination des particules en suspension ayant un diamètre inférieur ou égal à 10 $\mu$m et supérieur ou égal à 0,2 $\mu$m. L'utilisation de la technique de microfiltration fournit d'excellents résultats.

Lors de la microfiltration, le fluide à clarifier peut circuler perpendiculairement ou parallèlement à la membrane. Le plus souvent, il circule parallèlement à la membrane et le filtrat s'écoule perpendiculairement à cette direction, la microfiltration étant alors dite "à courants croisés" (crossflow microfiltration). Cette disposition relative réduit la formation de la couche de dépôt risquant d'obstruer les pores de la membrane.

Diverses configurations de membranes peuvent être adoptées. En particulier, la microfiltration sur une membrane tubulaire donne de très bons résultats.

L'opération de microfiltration conforme au procédé selon l'invention peut être mise en oeuvre de manière continue ou discontinue, en une ou plusieurs étapes. Dans le type d'application concerné, vu la faible teneur en boues de la solution, la microfiltration peut être réalisée en une seule étape (single stage recirculation) fonctionnant à la concentration finale souhaitée et avec un apport de solution et une extraction de filtrat continus.

Selon l'invention, l'épuration peut être réalisée à différentes températures. Celles-ci ne sont pas critiques. En pratique cependant, le choix d'une température de travail élevée provoque la diminution de la viscosité de la solution et permet d'augmenter le flux de filtrat pour une installation donnée. Généralement, la température de fonctionnement admise par la membrane permet d'opérer de 20 à 65 °C.

De même, la productivité du procédé, exprimée en $l/h.m^2$, peut être améliorée par un accroissement de la pression motrice, caractérisée par la différence de pression au travers de la membrane. Dans les hypothèses de microfiltration de solutions à forte concentration en particules insolubles, lorsqu'on augmente fortement la pression motrice, on provoque l'obstruction des pores de la membrane et l'on n'améliore plus proportionnellement la productivité. En l'espèce, vu la faible teneur en particules en suspension, la limite de la pression motrice est essentiellement imposée par la tenue mécanique de l'installation. Généralement, la pression motrice peut aller de 0,1 à 3 bars. Pratiquement, des valeurs de 1,2 à 3 bars sont avantageuses.

Dans ce fonctionnement à pression motrice élevée, la vitesse de circulation de la solution à l'intérieur de la membrane, lorsqu'elle n'excède pas 5m/s, n'exerce qu'une faible incidence.

Dans le procédé selon l'invention, il est particulièrement avantageux de laver la membrane à contre-courant, par inversion périodique du sens du flux de filtrat qui la traverse, afin d'extraire des pores les particules qui les obstruent (backflushing). Ces lavages peuvent être effectués selon diverses périodicités et durées. Généralement, ils sont réalisés de 1 à 70 fois par heure. Chaque lavage a la même durée, le plus souvent de 0,5 à 10 secondes.

Il peut être également fructueux de régénérer périodiquement la membrane de microfiltration par un traitement chimique. En général, ce traitement est réalisé après une période de fonctionnement de 3 à 250 heures.

Dans une réalisation particulière de cette régénération, la succession de deux traitements à la soude caustique (NaOH) et à l'acide chlorhydrique (HCl) s'avère très efficace. En pratique, l'utilisation de solutions de 5 à 15 g de HCl/100g de solution et de 3 à 25 g de NaOH/100g de solution donne d'excellents résultats.

L'invention concerne aussi le perborate de métal alcalin préparé par la mise en oeuvre d'une solution de peroxyde d'hydrogène et d'une solution de métaborate de métal alcalin obtenue par un procédé conforme à celui décrit ci-dessus. Les exemples donnés ci-après illustrent l'invention sans en restreindre la portée.

Exemple 1R (de référence, non conforme à l'invention)

Une solution de métaborate de sodium, trouble et jaunâtre, est fractionnée en 6 échantillons de 250 à 300ml que l'on filtre successivement, à température ambiante, sous une pression variant de 0,33 à 0,97 bar, au travers d'un papier Durieux.

Lors du premier essai, la perméabilité moyenne du filtre est de 6740 $kg/h.m^2.bar$. Le filtrat obtenu reste trouble et jaunâtre.

Au cours de la filtration successive des différents échantillons, le filtre papier acquiert une coloration brune. Corrélativement, la perméabilité moyenne diminue pour atteindre 92 $kg/h.m^2.bar$ avec le 6e échantillon.

Le filtrat obtenu lors de ce 6e essai est beaucoup plus clair que celui résultant du premier essai, mais il contient toujours des particules en suspension.

Cette expérience révèle l'influence majeure de la formation d'un dépôt sur le filtre, ce dépôt influençant progressivement le résultat de la filtration dans le sens d'une amélioration.

Quoi qu'il en soit, la filtration classique ne garantit pas l'élimination de toutes les particules en suspension dans la solution de métaborate de sodium.

Exemple 2R (de référence, non conforme à l'invention)

On attaque, en milieu aqueux (8,5l d'eau), à 45°C, un minerai borosodique pentahydraté $Na_2B_4O_7.5H_2O$ (3 kg) avec une solution de soude caustique NaOH (2,8 l à 25 %). La solution de métaborate de sodium obtenue présente une coloration jaunâtre et contient 83mg de matières solides par kg de solution.

L'analyse de ces matières solides indique la présence dominante de cations de fer, mais aussi de sodium, de silicium, d'aluminium, magnesium,...

L'analyse granulométrique des boues contenues dans la solution révèle que 90% de ces boues est constitué de particules d'un diamètre compris entre 3 et 20 $\mu$m et que leur diamètre moyen se situe entre 6 et 7 $\mu$m.

Avec cette solution, on a effectué un essai de décantation dans une éprouvette de 500 ml, à 45°C.

Après décantation pendant 2 h, le 1/3 supérieur du liquide a été prélevé : il contenait encore 22 % de la quantité initiale de matières solides.

Exemple 3 (conforme à l'invention)

La solution de métaborate traitée est comparable à la solution de l'exemple 2R; préparée selon la même réaction que sous 2R, mais au départ d'un autre échantillon de minerai borosodique. Elle présente une teneur initiale en matières solides de 133 mg/kg de solution. Elle est microfiltrée dans un module pilote possèdant les caractéristiques suivantes : les membranes sont en polypropylène, de forme tubulaire, de diamètre intérieur de 5,5mm, de diamètre extérieur de 8,6mm, chaque tube ayant une longueur d'1,5m, chaque module comprenant 43 tubes, la surface totale d'échange étant d'un mètre carré. Le diamètre moyen des pores de la membrane est de 0,22$\mu$m (membrane de marque Enka, de type Accurel fin 080 TP 2N).

L'essai est réalisé à une température de 45°C, à une pression motrice de 0,75 bar, à une vitesse de circulation de 3,5 m/s, avec une perméabilité moyenne de 250 l/h.m².bar. Le lavage à contre-courant de la membrane (backflush) est réalisé à une fréquence de 6 h⁻¹, durant 5 sec, avec une pression motrice de 2 bar.

Après cette microfiltration, on a mesuré 0 mg de matières solides dans le filtrat et la solution était tout à fait limpide et incolore.


Exemple 4 (conforme à l'invention)

La solution de métaborate traitée est comparable à la solution de l'exemple 2R, préparée selon la même réaction que sous 2R, mais au départ d'un autre échantillon de minerai borosodique. Elle présente une teneur initiale en matières solides de 115 mg/kg de solution. Elle est microfiltrée dans un module pilote ayant les mêmes caractéristiques que celui de l'exemple 2, mais avec une surface d'échange de deux mètres carrés.

L'essai est réalisé à une température de 45°C, à une pression motrice de 0,7 à 1,7 bar, à une vitesse de circulation de 3,6 mis, avec une perméabilité moyenne de 120 à 175 l/h.m².bar. Le lavage à contre-courant de la membrane (backflush) est réalisé à une fréquence de 6 h⁻¹, durant 5 sec, avec une pression motrice de 1 à 1,9 bar

Après cette microfiltration, on a mesuré 0 mg de matières solides dans le filtrat et la solution était tout à fait limpide et incolore.

Au terme de cet essai, qui a duré 3 heures, la perméabilité à l'eau de la membrane, qui était initialement de 1050 l/h.m².bar, est tombée à 495 l/h.m².bar. Une régénération a alors été effectuée, selon le schéma :
-lavage à l'eau des membranes tubulaires, à 45°C et pendant 15 minutes, avec perméation de cette eau "en sens normal" (de l'intérieur = côté concentrat, à l'extérieur = côté filtrat) sous une pression motrice de 0,1 à 0,3 bar et avec une vitesse de circulation côté concentrat de 1,5 à 3,5 m/s .
-lavage à l'HCl 10 % des membranes tubulaires, à 45°C et pendant 15 minutes, avec perméation de cette solution de HCl "en sens normal" sous une pression motrice de 0,1 à 0,3 bar et avec une vitesse de circulation côté concentrat de 1,5 à 3,5 m/s.
-lavage à l'eau des membranes tubulaires, à 45°C et pendant 15 minutes, avec perméation de cette eau "en sens normal" sous une pression motrice de 0,1 à 0,3 bar et avec une vitesse de circulation côté concentrat de 1,5 à 3,5 m/s.
-lavage, à 45°C et pendant 30 minutes, au NaOH 5%, des membranes, avec perméation de cette eau "à contre-courant" (de l'extérieur = côté filtrat à l'intérieur = côté concentrat) sous une pression motrice de 0,5 à 1,5 bar; pendant cette perméation la vitesse de circulation de la solution de NaOH était nulle (filtration frontale ) .
-lavage à l'eau des membranes tubulaires, à 45°C et pendant 15 minutes, avec perméation de cette eau "en sens normal" sous une pression motrice de 0,1 à 0,3 bar et avec une vitesse de circulation côté concentrat de 1,5 à 3,5 m/s.

A l'issue de ce traitement, on a retrouvé une perméabilité à l'eau de 843 l/h.m².bar


**Revendications**

1 - Procédé pour l'épuration de solutions de métaborate de métal alcalin, caractérisé en ce qu'on clarifie ces solutions par élimination des particules en suspension qui ont un diamètre inférieur ou égal à 10 $\mu$m et supérieur ou égal à 0,2 $\mu$m.

2 - Procédé selon la revendication 1, caractérisé en ce que le métal alcalin est le sodium.

3 - Procédé selon l'une quelconque des revendications 1 ou 2, caractérisé en ce que les particules en suspension sont éliminées par centrifugation.

4 - Procédé selon l'une quelconque des revendications 1 ou 2, caractérisé en ce que les particules en suspension sont éliminées en les retenant sur une membrane de microfiltration.

5 - Procédé selon la revendication 4, caractérisé en ce que la microfiltration est réalisée à courants croisés, en une seule étape et de manière continue.

6 - Procédé selon l'une quelconque des revendications 4 ou 5, caractérisé en ce que la microfiltration est réalisée à une température pouvant aller de 20 à 65°C et à une pression motrice pouvant aller de 0,1 à 3 bars.

7 - Procédé selon l'une quelconque des revendications 4 à 6, caractérisé en ce qu'on lave la membrane à contre-courant, de 1 à fois par heure, durant 0,5 à 10 secondes.

8 - Procédé selon l'une quelconque des revendications 4 à 7, caractérisé en ce que l'on régénère chimiquement la membrane après une période de fonctionnement de 3 à 250 heures.

9 - Procédé selon la revendication 8, caractérisé en ce que la régénération chimique de la membrane est réalisée par deux traitements successifs à la soude caustique (NaOH) et à l'acide chlorydrique (HCl).

10 - Perborate de métal alcalin préparé à partir d'une solution de métaborate de métal alcalin obtenue par un procédé selon l'une des revendications 1 à 9.

Office européen
des brevets

# RAPPORT DE RECHERCHE EUROPEENNE

Numero de la demande

EP    90 20 1223

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3218120 (L. AMODEO)<br>* colonne 1, lignes 44 - 49; revendication 8 * | 1-3, 10 | C01B35/12 |
| D,A | DE-A-2608597 (TREIBACHER CHEMISCHE WERKE) | | |

|  |  |  | **DOMAINES TECHNIQUES RECHERCHES (Int. Cl.5)** |
|---|---|---|---|
|  |  |  | C01B |

Le présent rapport a été établi pour toutes les revendications

| Lieu de la recherche | Date d'achèvement de la recherche | Examinateur |
|---|---|---|
| LA HAYE | 19 JUIN 1990 | VAN BELLINGEN I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)